# EUROPÄISCHE PATENTSCHRIFT

(11) **EP 2 586 587 B1**
(45) Veröffentlichungstag und Bekanntmachung des Hinweises auf die Patenterteilung: **02.03.2016**
(21) Anmeldenummer: 12184462.5
(22) Anmeldetag: 14.09.2012
(51) Int. Cl.: B29C 45/14, B29C 45/76

(54) **Vorrichtung und Verfahren zur Herstellung eines Gegenstands mittels Spritzgießwerkzeug**
Device and method for producing an object with an injection moulding tool
Dispositif et procédé de fabrication d'un objet au moyen d'un outil de moulage par injection

(30) Priorität: 28.10.2011 DE 102011054889
(43) Veröffentlichungstag der Anmeldung: 01.05.2013
(73) Patentinhaber: Gerresheimer Regensburg GmbH, 93047 Regensburg (DE)
(72) Erfinder: Kallabis, Matthias, 93080 Pentling (DE)
(74) Vertreter: Schuhbießer, Irmgard Gertrud

(56) Entgegenhaltungen:
- EP-A2- 1 057 586
- WO-A1-2011/043383
- JP-A- 6 219 017
- JP-A- 8 078 452
- JP-U- H02 112 415
- US-A1- 2004 115 294

## Beschreibung

Die Erfindung bezieht sich auf eine Vorrichtung und ein Verfahren zur Herstellung eines Gegenstands mittels Spritzgießwerkzeug. Insbesondere bezieht sich die Erfindung auf eine Vorrichtung und ein Verfahren zur Herstellung einer Lanzette, die beispielsweise von einem Patienten als Stechmittel zur Blutprobenentnahme für die Bestimmung seines Blutzuckerwerts verwendet werden kann.

Firmenintern ist der Anmelderin eine Vorrichtung zur Herstellung einer Lanzette bekannt. Bei dieser Vorrichtung wird bei einem ersten Anlagenteil eine Nadel in eine Aufnahmeeinrichtung eingelegt. Bei einem zweiten Anlagenteil wird die Nadel durch Spritzgießen mit einem Kunststoff umgossen. Bei einem dritten Anlagenteil wird die im zweiten Anlagenteil hergestellte Lanzette von der Aufnahmeeinrichtung entnommen. Bei einem vierten Anlagenteil werden fehlerhafte Lanzetten aussortiert und die fehlerfreien Lanzetten an ein Magazin übergeben. Die korrekte Funktion der Vorrichtung wird zumindest bei dem ersten und dritten Anlagenteil mittels einer optischen Erfassungseinrichtung, beispielsweise einer Kamera oder einer Lichtschranke, erfasst. Die optische Erfassungseinrichtung prüft beispielsweise durch Auswertung eines Bildes, ob die Nadeln im Anlagenteil 1 richtig liegen, damit sie im Anlagenteil 2 richtig umgossen werden können.

Problematisch ist jedoch, dass eine Nadel in der Regel einen sehr geringen Durchmesser von unter 1 mm hat. Die Spitze der Nadel hat einen noch geringeren Durchmesser. Diese geringen Abmessungen gestalten sowohl die richtige Positionierung der Nadeln als auch deren Erfassung schwierig.

Darüber hinaus entstehen bei der Beleuchtung der aus Edelstahl gefertigten Nadeln Reflexionen und Spiegelungen, welche die von der optischen Erfassungseinrichtung ausgeführte Erfassung zusätzlich schwieriger gestaltet. Häufig können Nadeln nicht erkannt werden, welche beispielsweise nicht an der für sie vorgesehenen Position liegen. Dadurch kommt es immer wieder zu Schäden an der Vorrichtung oder an den Nadeln und damit dem herzustellenden Gegenstand. Dies führt zum einen immer wieder zum Stillstand der Vorrichtung und somit zu Produktionsausfällen. Zum anderen produziert die Vorrichtung mehr Ausschuss als hinnehmbar.

Die gleichen Probleme entstehen bei allen Vorrichtungen zur Herstellung eines Gegenstands, welche eine optische Erfassungseinrichtung verwenden, um die Position eines Bauteils des Gegenstands an einer Aufnahmeeinrichtung für das Bauteil zu prüfen.

US 2004/0115294 A1 zeigt eine Maschine mit Sensoren zum Steuern einer Formoperation. Hier sind eine Form und eine Formmaschine angegeben, welche eine Blasformmaschine sein kann, die für einen Formprozess mit einem in der Form positionierten vorgeformten Einsatzteil verwendet wird. Hierbei wird der Sensor verwendet, um eine Bedingung in der Form wie etwa die Position des Einsatzteils festzustellen. Der Sensor kann ein Mikroschalter, ein Nähesensor oder Ultraschallsensor sein. Es ist jedoch keine Bestückungseinrichtung und keine Angabe in Bezug auf eine Anordnung einer Sensorfläche offenbart.

EP 1 057 586 A2 beschreibt ein Werkzeug für die Umform-, Stanz- oder Spritzgusstechnik, das mit einer Funktionsoberfläche versehen ist. Das Werkzeug enthält ein Modul, wobei in der Ebene der Oberfläche des Moduls eine flächenhafte Anordnung mehrerer Dünnschichtsensoren angeordnet ist.

Es ist daher Aufgabe der Erfindung, eine Vorrichtung und ein Verfahren zur Herstellung eines Gegenstands mittels Spritzgießwerkzeug zur Verfügung zu stellen, bei welchen der Herstellungsvorgang des Gegenstands verbessert ist, indem insbesondere der Ausschuss minimiert ist und Schäden an der Vorrichtung vermieden werden.

Diese Aufgabe wird durch eine Vorrichtung zur Herstellung eines Gegenstands mittels Spritzgießwerkzeug nach Patentanspruch 1 gelöst.
Die zuvor beschriebene Vorrichtung ist sehr einfach aufgebaut und kann störungsfrei sicherstellen, dass das Bauteil an der Aufnahmeeinrichtung nur an der vorbestimmten Position gehalten ist. Sobald beispielsweise ein Bauteil die Erfassungseinrichtung berührt, wird dies erfasst und der Herstellungsprozess der Vorrichtung kann angehalten werden. Es kann insbesondere sichergestellt werden, dass die Bestückungseinrichtung die Aufnahmeeinrichtung richtig mit dem Bauteil bestückt.

Durch die Ausführung der Erfassungseinrichtung mit einer an der Aufnahmeeinrichtung angebrachten Sensorfläche können die Probleme von optischen Sensoren, wie Reflexionen, Spiegelungen usw. vermieden werden. Zudem ist die Vorrichtung aufgrund der Erfassungseinrichtung deutlich kostengünstiger und weniger wartungsanfällig als eine Vorrichtung mit einer Kamera als Erfassungseinrichtung, welche Schutzeinrichtungen und umfangreiche Softwarepakete zur Erfassung und Auswertung umfasst.

Vorteilhafte weitere Ausgestaltungen der Vorrichtung sind in den abhängigen Patentansprüchen angegeben.

Vorzugsweise ist die Erfassungseinrichtung zusätzlich zumindest teilweise innerhalb der Vertiefung angeordnet.

Es ist von Vorteil, wenn die Erfassungseinrichtung ausgestaltet ist zur Erfassung, ob an der Aufnahmeeinrichtung ein Bauteil nicht an der vorbestimmten Position gehalten ist.

Es ist von auch Vorteil, wenn die Erfassungseinrichtung ausgestaltet ist zur Erfassung, ob die Bestückungseinrichtung die Aufnahmeeinrichtung richtig mit dem Bauteil bestückt, den Bereich innerhalb und/oder außerhalb der Vertiefung erfasst. Auf diese Weise können praktisch alle Arten von fehlpositionierten Bauteilen erfasst werden.

Die Aufnahmeeinrichtung kann zwei Anlageflächen zum Anlegen des Bauteils an der Aufnahmeeinrichtung aufweisen, wobei die Erfassungseinrichtung ausgestaltet ist zur Erfassung, ob das Bauteil an den zwei Anlageflächen anliegt.

Es ist möglich, dass die Erfassungseinrichtung eine kapazitive oder induktive Erfassungseinrichtung oder ein Piezo- bzw. Drucksensor oder Ultraschallsensor ist.

Es ist auch möglich, dass die Erfassungseinrichtung ein Dünnfilmsensor ist.

Die Vorrichtung kann zudem eine Steuereinrichtung zur Steuerung der Vorrichtung auf der Grundlage eines Erfassungsergebnisses der Erfassungseinrichtung sein.
Die Vorrichtung kann eine Vielzahl von Aufnahmeeinrichtungen umfassen, die von der Bestückungseinrichtung in einem vorbestimmten Takt bestückt werden.

Die Aufgabe wird zudem durch ein Verfahren zur Herstellung eines Gegenstands mittels Spritzgießwerkzeug nach Patentanspruch 10 gelöst.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild einer Vorrichtung gemäß einem ersten Ausführungsbeispiel;
Fig. 2 eine dreidimensionale Ansicht einer Lanzette, die mit der Vorrichtung gemäß dem ersten Ausführungsbeispiel herstellbar ist;
Fig. 3 eine schematische dreidimensionale Ansicht eines Teils der Vorrichtung gemäß dem ersten Ausführungsbeispiel;
Fig. 4 eine schematische Draufsicht auf einen Teil der Vorrichtung gemäß dem ersten Ausführungsbeispiel;
Fig. 5 eine vergrößerte Teilansicht der Vorrichtung gemäß dem ersten Ausführungsbeispiel;
Fig. 6 eine weitere vergrößerte Teilansicht der Vorrichtung gemäß dem ersten Ausführungsbeispiel;
Fig. 7 eine Seitenschnittteilansicht einer Vorrichtung gemäß dem ersten Ausführungsbeispiel;
Fig. 8 eine vergrößerte Teilansicht einer Vorrichtung gemäß einem zweiten Ausführungsbeispiel; und
Fig. 9 eine Seitenschnittteilansicht einer Vorrichtung gemäß dem dritten Ausführungsbeispiel.

In den Figuren sind gleiche oder funktionsgleiche Elemente, sofern nichts anderes angegeben ist, mit denselben Bezugszeichen versehen.

Die Erfindung ist nachfolgend anhand einer Vorrichtung zur Herstellung einer Lanzette beschrieben. Es ist jedoch selbstverständlich, dass die Erfindung auch andere Vorrichtungen zur Herstellung eines anderen Gegenstands, also keiner Lanzette, umfasst.

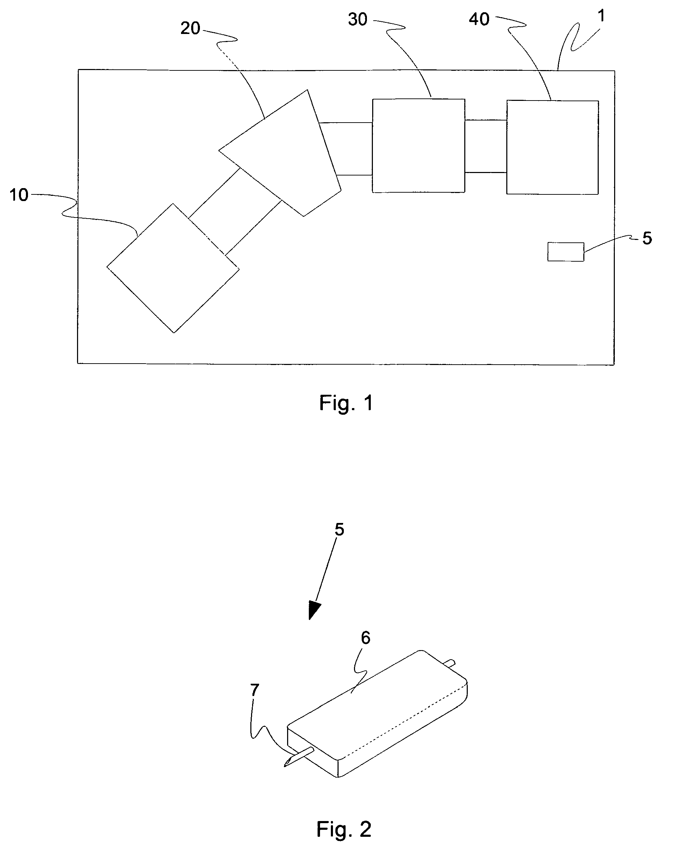

Fig. 1 zeigt eine Vorrichtung 1 zur Herstellung eines Gegenstands 5, in diesem Fall einer Lanzette, gemäß einem ersten Ausführungsbeispiel. Die Vorrichtung 1 hat einen ersten Anlagenteil 10, einen zweiten Anlagenteil 20, einen dritten Anlagenteil 30 und einen vierten Anlagenteil 40. Die Vorrichtung 1 ist nachfolgend noch genauer beschrieben.

In Fig. 2 ist eine von der Vorrichtung 1 hergestellte Lanzette 5 mit einem Grundkörper 6 und einer Nadel 7 dargestellt. Die Nadel 7 ist an dem Grundkörper 6 befestigt. Die Nadel 7 ist vorzugsweise aus Edelstahl gefertigt und hat einen Durchmesser von kleiner als 1 mm, beispielsweise 0,3 - 0,4 mm oder noch kleiner. Die Spitze der Nadel 7 hat einen noch geringeren Durchmesser. Die Lanzette 5 kann beispielsweise von einem Patienten als Stechmittel zur Blutprobenentnahme für die Bestimmung seines Blutzuckerwerts eingesetzt werden.

Bei der Herstellung der Lanzette 5 dient der erste Anlagenteil 10 in Fig. 1 zur Positionierung von Nadeln 7 an einer vorbestimmten Position, in welcher die Nadeln 7 bei der weiteren Herstellung der Lanzette 5 zu halten sind. Der zweite Anlagenteil 20 dient zum Spritzgießen. Hier wird ein Kunststoffgranulat aufgeschmolzen und in einen Hohlraum, der auch Formnest oder Kavität genannt wird und in dem sich eine Nadel 7 befindet, eingespritzt. Sobald sich der Kunststoff in dem Hohlraum verfestigt hat, kann das gespritzte Teil der Form entnommen werden. Der Kunststoff kann insbesondere PP, ABS, etc. sein. Der dritte Anlagenteil 30 dient zum Entnehmen der fertiggestellten Lanzette 5 und gegebenenfalls vorhandenem Anguss. Der vierte Anlagenteil 40 dient zum Schlechtteilabwurf, d. h. zur Aussonderung von fehlerhaften Lanzetten 5, und zur Übergabe der fertiggestellten Lanzetten 5 an ein Magazin zur Lagerung oder Auslieferung der Lanzetten 5.

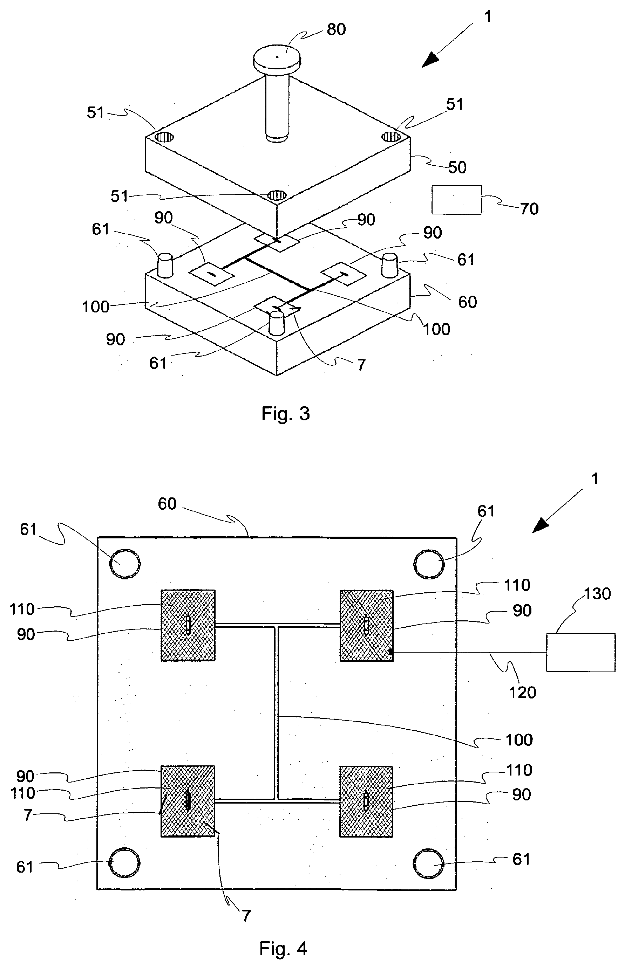

Fig. 3 zeigt die Vorrichtung 1 beim ersten Anlagenteil 10 genauer. Die Vorrichtung 1 umfasst also zudem ein Werkzeugoberteil 50, ein Werkzeugunterteil 60 und eine Bestückungseinrichtung 70. Die Bestückungseinrichtung 70 ist in Fig. 3 nur sehr schematisch dargestellt und dient zum Bestücken des Werkzeugunterteils 60 mit einem Bauteil 7 des Gegenstands 5, in diesem Fall Nadeln 7. Das Werkzeugoberteil 50 hat mehrere Zentrierbohrungen 51, in welche jeweils ein Zentrierstift 61 des Werkzeugunterteils 60 eingefügt werden kann. Dadurch können das Werkzeugoberteil 50 und das Werkzeugunterteil 60 in einer fest vorgegebenen Stellung zueinander angeordnet werden. An dem Werkzeugoberteil 50 ist eine Spritzdüse 80 zum Spritzen von Kunststoff in Aufnahmeeinrichtungen 90 vorgesehen. In dem Werkzeugunterteil 60 sind in Fig. 3 mehrere Aufnahmeeinrichtungen 90 angeordnet. Die Aufnahmeeinrichtungen 90 sind mit einem Fließkanal 100 verbunden, in welchem beim zweiten Anlagenteil 20 flüssiger Kunststoff zwischen den Aufnahmeeinrichtungen 90 fließen kann. An einer der Aufnahmeeinrichtungen 90 sind zwei fehlpositionierte Nadeln 7 dargestellt.

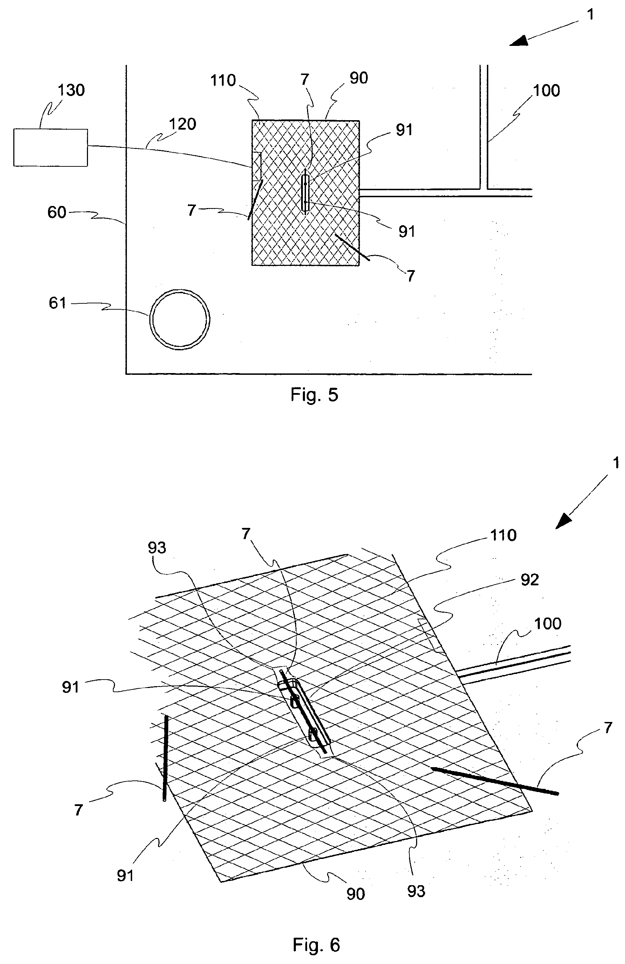

Fig. 4 und Fig. 5 zeigen das Werkzeugunterteil 60 genauer. An jeder der Aufnahmeeinrichtungen 90 ist eine Erfassungseinrichtung 110 angebracht. Die Erfassungseinrichtung 110 ist ein Dünnschichtsensor oder Dünnfilmsensor, welcher kapazitiv oder induktiv arbeitet oder ein Piezo- bzw. Drucksensor oder Ultraschallsensor sein kann. Jede Erfassungseinrichtung 110 ist in Fig. 4 und Fig. 5 mit Rauten markiert. Jede Erfassungseinrichtung 110 ist an einer Aufnahmeeinrichtung 90 derart angeordnet, dass eine Nadel 7, welche nicht korrekt in der Aufnahmeeinrichtung 90 an der für sie vorgesehenen vorbestimmten Position angeordnet ist, d. h. in falscher Position liegt, erkannt wird. Jede Erfassungseinrichtung 110 hat mindestens eine Sensorfläche, welche an der Aufnahmeeinrichtung 90 angebracht ist. In den Figuren ist die Erfassungseinrichtung 110 jeweils mit nur einer Sensorfläche dargestellt, so dass die Sensorfläche auch mit dem Bezugszeichen 110 bezeichnet ist.

Die Erfassungseinrichtungen 110 sind jeweils mit einem Signalkabel 120 mit einer Steuereinrichtung 130 verbunden. Der Übersichtlichkeit halber ist in Fig. 4 nur an einer der Erfassungseinrichtungen 110 ein Signalkabel 120 dargestellt.

Erkennt eine der Erfassungseinrichtungen 110, dass eine Nadel 7 nicht an der für sie vorgesehenen vorbestimmten, also richtigen, Position liegt, wie bei der Aufnahmeeinrichtung 90 im linken unteren Viertel des Werkzeugunterteils 60 in Fig. 4, und noch besser in Fig. 5, dargestellt, gibt die Erfassungseinrichtung 110 über das Signalkabel 120 ein Signal an die Steuereinrichtung 130 aus. Es wird signalisiert, dass an der Aufnahmeeinrichtung ein Bauteil 7, das heißt eine Nadel 7, nicht an der vorbestimmten Position gehalten ist. Wird keine falschliegende bzw. fehlpositionierte Nadel 7 erkannt, gibt die Erfassungseinrichtung 110 kein Signal an die Steuereinrichtung 190 aus. Empfängt die Steuereinrichtung 130 ein Signal von der Erfassungseinrichtung 110, stoppt sie die Vorrichtung 1, damit die fehlpositionierte Nadel 7 entfernt werden kann.

In Fig. 6 ist die Anordnung der Erfassungseinrichtung 110 an der Aufnahmeeinrichtung 90 besser dargestellt. In Fig. 6 ist in der Aufnahmeeinrichtung 90 eine Nadel 7 korrekt aufgenommen und damit korrekt positioniert. Die korrekt positionierte Nadel 7 liegt auf zwei Stützelementen 91 auf, welche die Nadel 7 an der korrekten, genauer gesagt vorbestimmten Position, stützen. Die Stützelemente 91 sind als Zapfen bzw. Bolzen ausgeführt, die beabstandet voneinander in einer Vertiefung 92 der Aufnahmeeinrichtung 90 angeordnet sind. Die Nadel 7 liegt außerdem an Anlageflächen 93 an, die an die Vertiefung 92 anschließen. Eine korrekt positionierte Nadel 7 ragt sowohl an ihrer Spitze als auch an ihrem Ende etwas über die Vertiefung 92 hinaus und in die jeweils dort angeordneten Anlageflächen 93 hinein. Die Anlageflächen 93 sind somit an den Schmalseiten der rechteckig ausgebildeten Vertiefung 92 angeordnet. Hierbei werden vorzugsweise alle Funktionen der Vorrichtung 1 gestoppt.

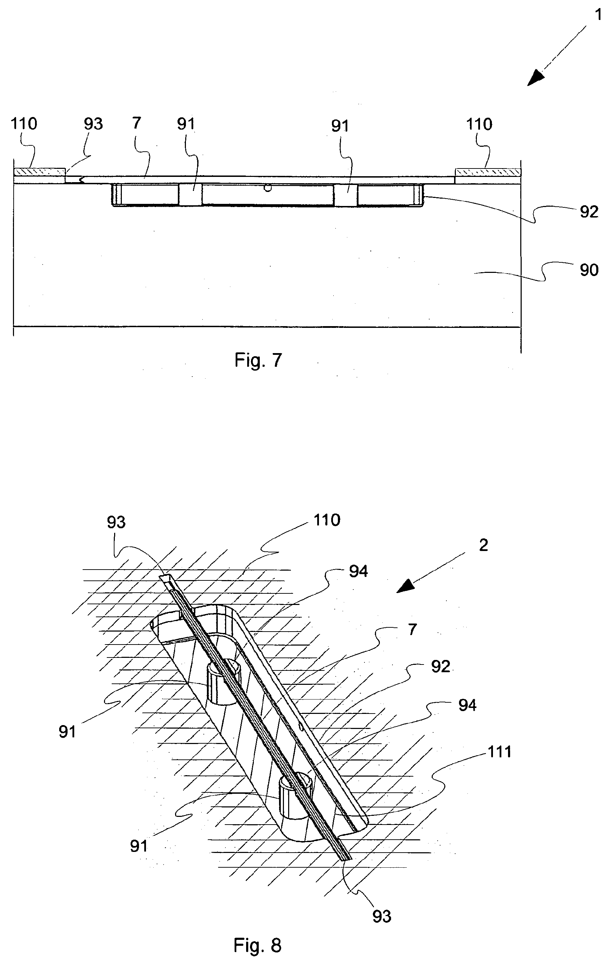

Fig. 7 zeigt die Anordnung der Erfassungseinrichtung 110 im Bereich der Vertiefung 92 und der Anlagefläche bzw. Aussparungen 93 in einer Schnittansicht noch besser. Wie hier dargestellt, sind auch die Anlageflächen 93 als Aussparungen in der Aufnahmeeinrichtung 90 ausgeführt. Die Aussparung der Anlagefläche 93 hat jedoch eine geringere Tiefe als die Tiefe der Vertiefung 92. Die Bolzen 91 haben jeweils eine Einkerbung 94, in welcher die Nadel 7 eingelegt ist. Die Nadel 7 liegt demnach an zwei Punkten, nämlich den Bolzen 91 und noch genauer ihren Einkerbungen 94 auf. Zudem wird die Nadel 7 leicht gegen einen Anschlag in den Anlageflächen 93 gedrückt. Somit liegt die Nadel 7 an den Anlageflächen 93 an, welche auch als zwei Punkte bezeichnet werden können, an welchen die Nadel 7 anliegt. Die Erfassungseinrichtung 110 reicht bis an den Rand der Anlageflächen bzw. Aussparungen 93 und an den Rand der Vertiefung 92 heran. Letzteres ist besser in Fig. 6 dargestellt.

Demzufolge ist die Erfassungseinrichtung 110 außerhalb der Vertiefung 92 angeordnet, anders ausgedrückt um die Vertiefung 92 herum angeordnet. Hierbei ist die Erfassungseinrichtung 110 auch außerhalb der Anlageflächen 93 angeordnet, anders ausgedrückt um die Anlageflächen 93 herum angeordnet. In der Vertiefung 92 und an den Anlageflächen 93 bzw. ihrer Aussparung in der Aufnahmeeinrichtung 90 befindet sich keine Erfassungseinrichtung 110.

Sind nun Nadeln 7 fehlpositioniert, wie in Fig. 3 bis Fig. 6 gezeigt, können die fehlpositionierten Nadeln 7 von der Erfassungseinrichtung 110 erfasst werden, wie zuvor beschrieben. Die Erfassungseinrichtung 110 erfasst also, ob an der Aufnahmeeinrichtung 90 ein Bauteil 7, das heißt eine Nadel 7, nicht an der vorbestimmten Position gehalten ist. Es kann auch auf dem gesamten Werkzeugunterteil 50 erfasst werden, ob ein Bauteil 7, das heißt eine Nadel 7, nicht an der vorbestimmten Position gehalten ist. Hier wird insbesondere überprüft, ob die Bestückungseinrichtung 70, die Aufnahmeeinrichtung 90 richtig bestückt.

Auf diese Weise ist die Erfassung von fehlpositionierten Nadeln 7 bei der Vorrichtung 1 dieses Ausführungsbeispiels erheblich verbessert, da die Probleme von optischen Sensoren, wie Reflexionen, Spiegelungen usw. vermieden werden. Zudem ergeben sich die zuvor genannten Vorteile.

Fig. 8 zeigt eine vergrößerte Teilansicht einer Vorrichtung 2 gemäß einem zweiten Ausführungsbeispiel. Die Vorrichtung 2 ist in weiten Teilen auf die gleiche Weise aufgebaut, wie die Vorrichtung 1 des ersten Ausführungsbeispiels. Daher werden im Folgenden vor allem die Unterschiede zwischen dem ersten und zweiten Ausführungsbeispiel beschrieben.

In Fig. 8 ist in der Aufnahmeeinrichtung 90 eine Nadel 7 korrekt positioniert. Wie bei dem vorangehenden Ausführungsbeispiel, ist auch bei der Vorrichtung 2 dieses Ausführungsbeispiels die Erfassungseinrichtung 110 außerhalb der Vertiefung 92 angeordnet, anders ausgedrückt um die Vertiefung 92 herum angeordnet. Hierbei ist die Erfassungseinrichtung 110 auch außerhalb der Anlageflächen 93 angeordnet, anders ausgedrückt um die Anlageflächen 93 herum angeordnet. Zusätzlich ist hier eine Erfassungseinrichtung 111 innerhalb der Vertiefung 92 angeordnet. Die Erfassungseinrichtung 111 ist mit der Erfassungseinrichtung 110 verbunden, auch wenn dies in Fig. 8 nicht dargestellt ist.

Auf diese Weise können auch Nadel 7 erkannt werden, die in der Vertiefung 92 falsch positioniert sind. Auch hier kann die Steuereinrichtung 130, wenn sie ein Signal von der Erfassungseinrichtung 110 empfängt, die Vorrichtung 2 stoppen, damit die fehlpositionierte Nadel 7 entfernt werden kann. Die Erfassungseinrichtung 110 erfasst also, ob an der Aufnahmeeinrichtung ein Bauteil 7, das heißt eine Nadel 7, nicht an der vorbestimmten Position gehalten ist. Hier wird wieder insbesondere überprüft, ob die Bestückungseinrichtung 70, die Aufnahmeeinrichtung 90 richtig bestückt.

Ferner kann die Erfassungseinrichtung 111 auch vor Bestückung der Aufnahmeeinrichtungen 90 mit Nadeln 7 prüfen, ob alle Aufnahmeeinrichtungen 90 frei sind. Das heißt, ob bei einer vorangegangenen Produktion von Gegenständen 5 beim Anlagenteil 3 alle fertiggestellten Gegenstände 5 von den Aufnahmeeinrichtungen 90 entnommen wurden. Empfängt die Steuereinrichtung 130 ein Signal von der Erfassungseinrichtung 111, dass nicht alle Aufnahmeeinrichtungen 90 frei sind, stoppt sie die Vorrichtung 2, damit die Aufnahmeeinrichtung(en) 90 entleert werden können. Eine solche Erfassung ist vorteilhaft, wenn bei der Herstellung des Gegenstands 5 der Gegenstand oder Fertigungsreste an der Aufnahmeeinrichtung 90 kleben bleiben. Für eine solche Erfassung kann zusätzlich die Erfassungseinrichtung 110 zum Einsatz kommen um zu erfassen, ob Fertigungsreste über die Vertiefung 92 hinausragen.

Auf diese Weise kann auch die Erfassungseinrichtung 111 erfassen, ob an der Aufnahmeeinrichtung ein Bauteil 7, das heißt eine Nadel 7, nicht an der vorbestimmten Position gehalten ist. Hier wird mit der Erfassungseinrichtung 111 zum einen überprüft, ob die Bestückungseinrichtung 70, die Aufnahmeeinrichtung 90 richtig bestückt. Zum anderen wird mit der Erfassungseinrichtung 111 geprüft, ob vor einer Bestückung mit der Bestückungseinrichtung 70 alle Aufnahmeeinrichtung(en) 90 entleert sind.

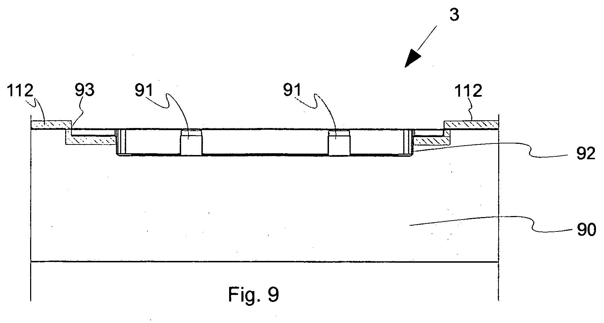

Fig. 9 zeigt eine vergrößerte Teilschnittansicht einer Vorrichtung 3 gemäß einem dritten Ausführungsbeispiel. Die Vorrichtung 3 ist in weiten Teilen auf die gleiche Weise aufgebaut, wie die Vorrichtung 1 des ersten Ausführungsbeispiels. Daher werden im Folgenden vor allem die Unterschiede zwischen dem ersten Ausführungsbeispiel und dem vorliegenden Ausführungsbeispiel beschrieben.

Wie in Fig. 9 im Schnitt dargestellt, ist bei der Vorrichtung 3 dieses Ausführungsbeispiels eine Erfassungseinrichtung 112 auch an den Anlageflächen 93 angebracht. Somit reicht die Erfassungseinrichtung 112 auch im Bereich der Anlageflächen 93 bis an den Rand der Vertiefung 92 heran. In der Vertiefung 92 ist dagegen keine Erfassungseinrichtung angeordnet.

Die Erfassungseinrichtung 112 ist demzufolge nicht an den beiden Punkten, an welchen die Nadel 7 aufliegt, nämlich den Einkerbungen 94 der Bolzen 91, vorhanden. Zudem ist in der Vertiefung 92 keine Erfassungseinrichtung vorhanden.

Auf diese Weise kann mit der Erfassungseinrichtung 112 auch sicher erfasst werden, ob die Nadel 7 an der Aufnahmeeinrichtung 90 richtig positioniert ist. Ist die Nadel 7 in der vorbestimmten Position angeordnet, wird die Nadel 7 an beiden Anlageflächen 93 erfasst.

Darüber hinaus kann die Erfassungseinrichtung 112 selbstverständlich, wie bei den vorangehenden Ausführungsbeispielen, auch fehlpositionierte Nadeln 7 an der Aufnahmeeinrichtung 90 erkennen.

Daher kann auch die Erfassungseinrichtung 112 dieses Ausführungsbeispiels erfassen, ob an der Aufnahmeeinrichtung ein Bauteil 7, das heißt eine Nadel 7, nicht an der vorbestimmten Position gehalten ist. Hier wird mit der Erfassungseinrichtung 110 zum einen überprüft, ob die Bestückungseinrichtung 70, die Aufnahmeeinrichtung 90 richtig bestückt. Zum anderen kann die Erfassungseinrichtung 112 prüfen, ob vor einer Bestückung mit der Bestückungseinrichtung 70 alle Aufnahmeeinrichtung(en) 90 entleert sind.

Eine derartige Ausführung stellt eine noch weitere Verbesserung der Erfassung von fehlpositionierten Nadeln und Teilen in der Vorrichtung 3 gegenüber den Vorrichtungen 1, 2 der vorangehenden Ausführungsbeispiele dar. Es ergeben sich außerdem die zuvor genannten Vorteile.

Alle zuvor beschriebenen Ausgestaltungen der Vorrichtung und des Verfahrens können einzeln oder in allen möglichen Kombinationen Verwendung finden. Insbesondere ist eine beliebige Kombination der Ausführungsbeispiele und ihrer speziellen Merkmale möglich. Hierbei sind insbesondere folgende Modifikationen denkbar.

Die Vorrichtungen 1, 2, 3 der beschriebenen Ausführungsbeispiele können auch weniger oder mehr als vier Anlagenteile 10, 20, 30, 40 umfassen.

Die Vorrichtungen 1, 2, 3 der beschriebenen Ausführungsbeispiele können auch mehr oder weniger als vier Gegenstände gleichzeitig fertigen. Hier sind die Aufnahmeeinrichtungen 90 zur Aufnahme von entsprechend vielen Bauteilen auszugestalten. Insbesondere ist auch nur eine Aufnahmeeinrichtung 90 zur Aufnahme eines Gegenstands denkbar. In Bezug auf eine Vorrichtung zur Herstellung von Lanzetten können beispielsweise 64 Lanzetten gleichzeitig gefertigt werden. Eine solche Vorrichtung kann beispielsweise in einem Takt arbeiten, bei welchem die Bestückungseinrichtung 70 die Aufnahmeeinrichtungen 90 in weniger als 10 Sekunden mit mehreren Nadeln bestückt.

Die Vorrichtungen 1, 2, 3 der Ausführungsbeispiele sind für alle Vorrichtungen anwendbar, bei welchen Bauteile von einer Aufnahmeeinrichtung aufgenommen werden, insbesondere in diese eingelegt werden. Die Vorrichtungen 1, 2, 3 der Ausführungsbeispiele können anstelle einer Spritzgussvorrichtung insbesondere auch eine Stanz-, Schäum-, Umform-Montagevorrichtung usw. sein.

Anstelle einer Verbindung der Erfassungseinrichtungen 110, 111, 112 über ein Signalkabel 120 mit der Steuereinrichtung 130 kann die jeweilige Erfassungseinrichtung 110, 111, 112 auch über Funk, also drahtlos, mit der Steuereinrichtung 130 kommunizieren.

Die Erfassungseinrichtung 110 kann nicht nur an der/den Aufnahmeeinrichtung(en) 90 vorhanden sein. Das heißt, die Erfassungseinrichtung 110 kann auf der ganzen Fläche des Werkzeugunterteils 60 angeordnet sein, welche dem Werkzeugoberteil 50 und/oder der Bestückungseinrichtung 70 zugeordnet ist.

Die Erfassungseinrichtung 111 kann auch an den beiden Stützelementen 91 vorhanden sein und erfassen, ob das Bauteil 7 bzw. die Nadel 7 in die Einkerbungen der Stützelemente 91 eingelegt ist. Die Erfassungseinrichtung 111 kann insbesondere in den Einkerbungen 94 der Bolzen 91 vorhanden sein.

Die Erfassungseinrichtung 110 kann auch derart ausgestaltet sein, dass die Erfassungseinrichtung 110 bei Betrieb der Vorrichtung über das Signalkabel 120 bei korrekter Funktion immer ein Signal an die Steuereinrichtung 130 ausgibt. In diesem Fall wird das Signal der Erfassungseinrichtung 110 unterbrochen, wenn eine Nadel 7 nicht in der für sie vorgesehenen vorbestimmten Position liegt, wie beispielsweise bei der Aufnahmeeinrichtung 90 im linken unteren Viertel des Werkzeugunterteils 60 in Fig. 4 dargestellt. Die Erfassungseinrichtung 111 in der Vertiefung 92 und/oder die Erfassungseinrichtung 112 können/kann auf die gleiche Weise ausgeführt sein.

Die Erfassungseinrichtung 110 ist vorzugsweise ein dreischichtiger Dünnschichtsensor, welcher zwei Schichten mit jeweils einer Dicke von beispielsweise ca. 3 bis 4 µm und bevorzugt eine Chromelektrode aufweist, welche zwischen den zwei Sensorschichten angeordnet ist und eine Dicke von beispielsweise ca. 200 nm aufweist. Die Chromelektrode kann auf eine der zwei Schichten gesputtert sein. Die Chromelektrode kann auch mit Laser strukturiert sein. Eine der zwei Schichten kann eine Sensorschicht sein, wohingegen die andere Schicht eine Isolations- und Verschleißschutzschicht sein kann. Die Isolations- und Verschleißschutzschicht ist vorzugsweise als oberste Schicht an der Aufnahmeeinrichtung 90 angeordnet. Die Erfassungseinrichtung 111 und/oder die Erfassungseinrichtung 112 sind/ist vorzugsweise auf die gleiche Weise ausgeführt.

Alternativ können bei der Erfassungseinrichtung 110 auch zwei Isolations- und/oder Verschleißschutzschichten mit einer Dicke von beispielsweise ca. 3 bis 4 µm vorhanden sein, zwischen welchen eine Sensorschicht mit einer Dicke von beispielsweise ca. 200 nm angeordnet ist. Die Erfassungseinrichtung 111 und/oder die Erfassungseinrichtung 112 sind/ist vorzugsweise auf die gleiche Weise ausgeführt. In diesem Fall ist die Sensorschicht die Sensorfläche 110, welche über die eine der zwei Isolations- und/oder Verschleißschutzschichten an der Aufnahmeeinrichtung 90 angebracht ist.

Die Erfassungseinrichtung 110 kann als Folie ausgeführt sein. Die Erfassungseinrichtung 111 und/oder die Erfassungseinrichtung 112 können/kann auf die gleiche Weise ausgeführt sein
Die Erfassungseinrichtung 110, oder nur eine ihrer Sensorflächen, kann auf die Aufnahmeeinrichtung 90 aufgedampft sein. Hierfür ist beispielsweise ein CVD-Verfahren (Chemical Vapor Deposition = chemische Dampfabscheidung) und/oder ein PVD-Verfahren (Physical Vapor Deposition = physikalische Dampfabscheidung) einsetzbar. Die Erfassungseinrichtung 111 und/oder die Erfassungseinrichtung 112 können/kann auf die gleiche Weise ausgeführt sein.

Alternativ kann die Erfassungseinrichtung 110, oder nur eine ihrer Sensorflächen, auch an die Aufnahmeeinrichtung 90 angeklebt sein. Alternativ kann die Erfassungseinrichtung 110, oder nur eine ihrer Sensorflächen, auch an die Aufnahmeeinrichtung 90 angeschweißt sein. Alternativ kann die Erfassungseinrichtung 110, oder nur eine ihrer Sensorflächen, auch an die Aufnahmeeinrichtung 90 anlaminiert sein.

## Patentansprüche

1. Vorrichtung (1; 2; 3) zur Herstellung eines Gegenstands (5) mittels Spritzgießwerkzeug, mit
mindestens einer Aufnahmeeinrichtung (90) zur Aufnahme eines Bauteils (7) des Gegenstands (5), um das Bauteil (7) bei der weiteren Herstellung des Gegenstands (5) an einer vorbestimmten Position zu halten, **gekennzeichnet durch**
eine Bestückungseinrichtung (70) zum Bestücken der Aufnahmeeinrichtung (90) mit dem Bauteil (7), und
eine Erfassungseinrichtung (110; 111; 112) zur Erfassung einer Position des Bauteils (7) an der Aufnahmeeinrichtung (90),
wobei die Erfassungseinrichtung (110; 111; 112) eine Sensorfläche umfasst, die an die Aufnahmeeinrichtung (90) angebracht ist,
wobei die Aufnahmeeinrichtung (90) mindestens eine Vertiefung (92) aufweist, an welcher das Bauteil (7) aufnehmbar ist, und die Erfassungseinrichtung (110; 111; 112) zumindest teilweise außerhalb der Vertiefung (92) angeordnet ist.

2. Vorrichtung (1; 2; 3) nach Anspruch 1, wobei die Erfassungseinrichtung (110; 111; 112) zusätzlich zumindest teilweise innerhalb der Vertiefung (92) angeordnet ist.

3. Vorrichtung (1; 2; 3) nach Anspruch 1 oder 2, wobei die Erfassungseinrichtung (110; 111; 112) ausgestaltet ist zur Erfassung, ob an der Aufnahmeeinrichtung (90) ein Bauteil (7) nicht an der vorbestimmten Position gehalten ist.

4. Vorrichtung (1; 2; 3) nach einem der vorangehenden Ansprüche, wobei die Erfassungseinrichtung (110; 111; 112) ausgestaltet ist zur Erfassung, ob die Bestückungseinrichtung (70) die Aufnahmeeinrichtung (90) richtig mit dem Bauteil (7) bestückt, den Bereich innerhalb und/oder außerhalb der Vertiefung (92) erfasst.

5. Vorrichtung (1; 2; 3) nach einem der vorangehenden Ansprüche, wobei die Aufnahmeeinrichtung (90) zwei Anlageflächen (93) zum Anlegen des Bauteils (7) an der Aufnahmeeinrichtung (90) aufweist, und wobei die Erfassungseinrichtung (112) ausgestaltet ist zur Erfassung, ob das Bauteil (7) an den zwei Anlageflächen (93) anliegt.

6. Vorrichtung (1; 2; 3) nach einem der vorangehenden Ansprüche, wobei die Erfassungseinrichtung (110; 111; 112) eine kapazitive oder induktive Erfassungseinrichtung (110; 111; 112) oder ein Drucksensor oder ein Ultraschallsensor ist.

7. Vorrichtung (1; 2; 3) nach einem der vorangehenden Ansprüche, wobei die Erfassungseinrichtung (110; 111; 112) ein Dünnfilmsensor ist.

8. Vorrichtung (1; 2; 3) nach einem der vorangehenden Ansprüche, zudem mit einer Steuereinrichtung (130) zur Steuerung der Vorrichtung (1; 2; 3) auf der Grundlage eines Erfassungsergebnisses der Erfassungseinrichtung (110; 111; 112).

9. Vorrichtung (1; 2; 3) nach einem der vorangehenden Ansprüche, wobei die Vorrichtung (1; 2; 3) eine Vielzahl von Aufnahmeeinrichtungen (90) hat, die von der Bestückungseinrichtung (70) in einem vorbestimmten Takt bestückt werden.

10. Verfahren zur Herstellung eines Gegenstands (5) mittels Spritzgießwerkzeug, mit den Schritten
Bestücken, mit einer Bestückungseinrichtung (70), mindestens einer Aufnahmeeinrichtung (90) mit einem Bauteil (7) des Gegenstands (5),
Halten, mit der Aufnahmeeinrichtung (90), des Bauteils (7) in einer vorbestimmten Position, und
Erfassen, mit einer Erfassungseinrichtung (110; 111; 112), einer Position des Bauteils (7) an der Aufnahmeeinrichtung (90),
wobei die Erfassungseinrichtung (110; 111; 112) eine Sensorfläche umfasst, die an die Aufnahmeeinrichtung (90) angebracht ist,
wobei die Aufnahmeeinrichtung (90) mindestens eine Vertiefung (92) aufweist, an welcher das Bauteil (7) aufnehmbar ist, und die Erfassungseinrichtung (110; 111; 112) zumindest teilweise außerhalb der Vertiefung (92) angeordnet ist.

## Claims

1. Device (1; 2; 3) for producing an object (5) with an injecting molding tool, the device (1; 2; 3) comprising
at least one accommodating means (90) for accommodating a component (7) of the object (5) to hold the component (7) in a predetermined position in the further production of the object (5), **characterized by**
an equipping means (70) for equipping the accommodating means (90) with the component (7), and
a detecting means (110; 111; 112) for detecting a position of the component (7) at the accommodating means (90),
wherein the detecting means (110; 111; 112) comprises a sensor face mounted to the accommodating means (90),
wherein the accommodating means (90) comprises at least one cavity (92) at which the component (7) can be accommodated and the detecting means (110; 111; 112) is positioned at least partly outside of the cavity (92).

2. Device (1; 2; 3) according to claim 1, wherein the detecting means (110; 111; 112) is further positioned at least partly inside of the cavity (92).

3. Device (1; 2; 3) according to claim 1 or 2, wherein the detecting means (110; 111; 112) is configured for detecting, whether a component (7) is not held in the predetermined position at the accommodating means (90).

4. Device (1; 2; 3) according to one of the preceding claims, wherein the detecting means (110; 111; 112) is configured to detect the region inside and/or outside of the cavity (92) for detecting, whether the equipping means (70) correctly equips the accommodating means (90) with the component (7).

5. Device (1; 2; 3) according to one of the preceding claims, wherein the accommodating means (90) comprises two abutment faces (93) to abut the component (7) against the accommodating means (90), and wherein the detecting means (112) is configured for detecting, whether the component (7) abuts to the two abutment faces (93).

6. Device (1; 2; 3) according to one of the preceding claims, wherein the detecting means (110; 111; 112) is a capacitive or inductive detecting means (110; 111; 112) or a pressure sensor or an ultrasound sensor.

7. Device (1; 2; 3) according to one of the preceding claims, wherein the detecting means (110; 111; 112) is a thin film sensor.

8. Device (1; 2; 3) according to one of the preceding claims, further comprising a control means (130) for controlling the device (1; 2; 3) on the basis of a detecting result of the detecting means (110; 111; 112).

9. Device (1; 2; 3) according to one of the preceding claims; wherein the device (1; 2; 3) comprises a plurality of accommodating means (90) which are equipped by the equipping means (70) in a predetermined cycle.

10. Method for producing an object with an injecting molding tool, comprising the steps of
equipping, by an equipping means (70), at least one accommodating means (90) with a component (7) of the object (5),
holding, with an accommodating means (90), of the component (7) in a predetermined position, and
detecting, by a detecting means (110; 111; 112), a position of the component (7) at the accommodating means (90),
wherein the detecting means (110; 111; 112) comprises a sensor face mounted to the accommodating means (90),
wherein the accommodating means (90) comprises at least one cavity (92) at which the component (7) can be accommodated, and the detecting means (110; 111; 112) is positioned at least partly outside of the cavity (92).

## Revendications

1. Dispositif (1; 2; 3) pour produire un objet (5) avec un outil de moulage par injection, le dispositif (1; 2; 3) comprenant
au moins un moyen de logement (90) pour loger un composant (7) de l'objet (5) pour maintenir le composant (7) dans une position prédéterminée dans la production ultérieure de l'objet (5), **caractérisé par**
un moyen d'équipement (70) pour équiper le moyen de logement (90) du composant (7), et
un moyen de détection (110; 111; 112) pour détecter une position du composant (7) au niveau du moyen de logement (90),
dans lequel le moyen de détection (110; 111; 112) comprend une face de capteur montée sur le moyen de logement (90),
dans lequel le moyen de logement (90) comprend au moins une cavité (92) au niveau de laquelle le composant (7) peut être logé et le moyen de détection (110; 111; 112) est positionné au moins en partie à l'extérieur de la cavité (92).

2. Dispositif (1; 2; 3) selon la revendication 1, dans lequel le moyen de détection (110; 111; 112) est en outre positionné au moins en partie à l'intérieur de la cavité (92).

3. Dispositif (1; 2; 3) selon la revendication 1 ou 2, dans lequel le moyen de détection (110; 111; 112) est configuré pour détecter, si un composant (7) n'est pas maintenu dans la position prédéterminée au niveau du moyen de logement (90).

4. Dispositif (1; 2; 3) selon l'une des revendications précédentes, dans lequel le moyen de détection (110; 111; 112) est configuré pour détecter la région à l'intérieur et/ou à l'extérieur de la cavité (92) pour détecter, si le moyen d'équipement (70) équipe correctement le moyen de logement (90) du composant (7).

5. Dispositif (1; 2; 3) selon l'une des revendications précédentes, dans lequel le moyen de logement (90) comprend deux faces de butée (93) pour faire venir en butée le composant (7) contre le moyen de logement (90), et dans lequel le moyen de détection (112) est configuré pour détecter, si le composant (7) vient en butée sur les faces de butée (93).

6. Dispositif (1; 2; 3) selon l'une des revendications précédentes, dans lequel le moyen de détection (110; 111; 112) est un moyen de détection (110; 111; 112) capacitif ou inductif ou un capteur de pression ou un capteur à ultrasons.

7. Dispositif (1; 2; 3) selon l'une des revendications précédentes, dans lequel le moyen de détection (110; 111; 112) est un capteur à film fin.

8. Dispositif (1; 2; 3) selon l'une des revendications précédentes, comprenant en outre un moyen de commande (130) pour commander le dispositif (1; 2; 3) en fonction du résultat de détection du moyen de détection (110; 111; 112).

9. Dispositif (1; 2; 3) selon l'une des revendications précédentes, dans lequel le dispositif (1; 2; 3) comprend une pluralité de moyens de logement (90) qui sont équipés du moyen d'équipement (70) dans un cycle prédéterminé.

10. Procédé pour produire un objet avec un outil de moulage par injection, comprenant les étapes consistant à
équiper, à l'aide d'un moyen d'équipement (70), au moins un moyen de logement (90) d'un composant (7) de l'objet (5),
maintenir, avec un moyen de logement (90), le composant (7) dans une position prédéterminée, et
détecter, par un moyen de détection (110; 111; 112), une position du composant (7) au niveau du moyen de logement (90),
dans lequel le moyen de détection (110; 111; 112) comprend une face de capteur montée sur le moyen de logement (90),
dans lequel le moyen de logement (90) comprend au moins une cavité (92) au niveau de laquelle le composant (7) peut être logé, et le moyen de détection (110; 111; 112) est positionné au moins en partie à l'extérieur de la cavité (92).
